# EUROPEAN PATENT APPLICATION

(11) **EP 4 001 468 A1**
(43) Date of publication of application: **25.05.2022**
(21) Application number: 20208730.0
(22) Date of filing: 19.11.2020
(51) Int. Cl.: C25B 1/04, C25B 9/00, C25B 9/23, C25B 9/65

(54) **ELECTROLYTIC CELL**

(71) Applicant: Work & System Slot SARL, 1003 Lausanne (CH)
(72) Inventor: CUARTERO GARCIA-MORATO, Ricardo, 1052 Le Mont-sur-Lausanne (CH)
(74) Representative: Grosfillier, Philippe

(57) **Abstract**

An energetically autonomous electrolytic cell, no matter the shape, electrode technology, nature or mechanism, in which gases are produced in the dissociation of water or any other liquid. These gases pass through a liquid (the same feed liquid or another) producing a bubbling, whose kinetics produced by the great difference in densities between gases and liquids is capable of efficiently moving an electric generator coupled to a drive mechanism, the electrical energy produced by the electric generator being preferably used for the production of said gases.

## Description

### Field of invention

The present invention generally relates to electrochemical cells and more precisely to electrolytic cells.

### Background

Electrochemical cells are used for generating electrical energy from chemical reactions or for inducing chemical reactions from electrical energy. They are called electrolytic cells if they are exploited for inducing chemical reactions.
An electrolytic cell is often used to decompose chemical compounds in a process named electrolysis. In the case of electrolysis of water, the decomposition produces hydrogen gas and oxygen gas. To initiate such a reaction, it is necessary to apply sufficient electrical energy to break the bonds within the molecule, which results in the production of ions (anion and cation). The supply of electric power is made by electrodes in contact with the electrolyte. The negatively charged electrode is called the cathode and the positively charged electrode is called the anode. The ions in the form of gas are directed to and gather in the proximity of their respective electrodes, according to their positive or negative charge. In the case of the water molecule, which is composed of two atoms of hydrogen and one of oxygen through covalent bonds, hydrogen in the form of gas will appear at the cathode and oxygen at the anode. Hence, for the production of hydrogen and/or oxygen gases, the electrolytic cell needs to be filled with water and to be provided by sufficient electric power.

For the existing electrolytic cells, the electric power is provided by common energy sources such as nuclear, thermal, hydraulic, wind or solar.
Using those energy sources may however show some disadvantages. They may not always be available, in particular the renewable ones. Some produce relatively high quantities of CO2. Their size, especially for the production of hydrogen, may also be relatively important.

Furthermore, the electric power presently used for electrolysis is often much higher than what is actually required. As a consequence, the yield in the production of hydrogen, for instance to be used as an energy vector transportation, is very low.

There is therefore a need to improve the existing production of gases with electrolytic cells, in particular the production of hydrogen,

### General description of the invention

As it will be shown below, the present invention overcomes the problems mentioned in the previous chapter.
To this effect, it concerns an electrolytic cell than may be energy autonomous and which furthermore provides a higher yield in the production of gases.

The invention more precisely consists in an electrolytic cell that comprises:
- a gas production unit including an electrolyte, a cathode and an anode;
- an electric generator;
- a drive mechanism.
The generator is designed to be actuated by the drive mechanism.

The cell according to the invention is characterized by the fact that it also includes at least one liquid container that may be filled with any suitable liquid, for instance water, and which communicates with the gas production unit, and wherein the drive mechanism is located within the liquid container and is adapted to receive a mechanical energy that is provided by gas bubbles generated within said liquid by the gas production unit.

Advantageously the generator is connected to the gas production unit. With such a configuration the electrolytic cell may become energy autonomous.

The present invention is based on the observation that a gas in a liquid medium moves with the same force as a liquid in a gaseous environment. The difference in density between the two substances makes them move one into the other until a density balance is reached, as if they were two fluids, regardless their state (gaseous or liquid). The same would happen with two liquids or two gases with very different densities. The difference in density is proportional to the force that generates the fluid movement.
Hydrogen gas in air is very volatile. It shows a very fast rising speed due to its density being about ten times less than the air density. If the fluid around hydrogen is water instead of air, this density difference is increased to ten times. The force with which hydrogen rises inside a container filled with water is the same as that exerted by water when falling through a container filled with hydrogen gas.

The force imparted by a hydrogen gas that is immersed in a liquid may become so strong that it may activate a drive mechanism, such as a wheel-type mechanism, and thereby provide a mechanical energy to an electric generator.

In a preferred embodiment of the invention, the gas production unit and the electric generator drive mechanism are in the same volume, being immersed in the same liquid that feeds the electrolysis. In the case of hydrogen production, the liquid is water, with or without catalysts or dissolved elements depending on the nature of the electrodes or technology selected.

The gas production unit is preferably located at the bottom of the liquid container. This unit, which is in fact an electrolysis system, is powered by an electrical conductor that carries the electrical current to the electrodes (cathode and anode). The ions produced separate inside the electrolysis system depending on their positive or negative charge. In the case of water, hydrogen is separated from oxygen. When the ions are separated in the form of gas, they leave the electrolysis system through their corresponding outlets, preferably separated so that there is no possibility that the gases can mix up.

Once the gases have left the electrolysis system in the form of bubbles, they rise rapidly and are directed towards the lower part of the drive mechanism. This later one may advantageously comprise paddles in the form of a bowl or similar concave object that traps the gas. The bowl, which may be fixed to a chain or belt, begins to rise due to the upward thrust produced by the gas inside, moving upwards and dragging, by means of the chain or belt, another other bowl behind it that was placed just above the exit of the gases from the electrolysis system. At this moment, the upward force has doubled since there are two bowls that exert an equivalent upward force, increasing speed and giving way to repeating the process by dragging another bowl to occupy the place of gas filling.

Depending on the height of the liquid container, there may be a relatively important number of bowls attached to the chain. When the first bowl reaches the top of the drive mechanism, it releases the accumulated gas due to the simple fact that it rotates and lets the gas inside it escape. This point corresponds to the maximum level of liquid needed, since above it there is no longer an exploitation of the buoyancy power of the gas. Once the bowl has released the gas, it rotates on the wheel and re-enters the fluid, but this time in an inverted way, leaving the part open at the top and filling with fluid as a result. This action is repeated since the rest of the pans that contain gas continue to rise through the mechanism.

The gas is channelled in the upper part of the drive mechanism and extracted for its corresponding storage or use.

The chain preferably contains bowls along its entire length, with an adequate spacing between two adjacent bowls, to allow the gas to be filled without one being able to interfere with the next. The length of the chain should be long enough for a number of bowls to be sufficient for the sum of all the upward forces to achieve sufficient mechanical power so that the electrical generator, connected to the wheel that moves the chain or belt, generates enough electricity that the electrolysis system needs to generate the volume of gas required to fill the bowls. This means that if the height is not enough, an additional (external) energy has to be provided to the electrolysis system. It also means that if the length of the mechanism is exceeded, an excess of electrical energy may result. This available energy could be use in another independent application, electronic circuitry, auxiliary systems, the gas compression mechanism produced, or simply as surplus electrical energy. One of the most recommended uses for the use of that additional energy is for the incorporation of a system of condensate and distillate of humidity from the air in order to be able to be autonomous with respect to the source of water necessary for the electrolysis system.

Since two gases are produced in the separation of the fluid by electrolysis, two chains or belts can be installed, both with anchored bowls that are connected to the same electrical generator, separated by a wall that keeps the gas bubbles separated, thus increasing their power. In most cases the density of the two gases produced is not the same, so the size or number of pans does not have to be the same. In the case of water, the volume of oxygen it produces is much lower than the volume of hydrogen

For the system to start up, in the first fillings, the upward thrust force may not be sufficient to generate enough electrical energy required by the electrolysis system. In this case starting battery may be used. Subsequently, the electric generator must have enough power to recharge the battery and make the electrolysis system work in an autonomous manner. The starting battery can be replaced by a connection to an external power source or the electrical grid itself.

In another embodiment, the electrolysis system does not share with the bowls mechanism the volume of the fluid-filled bowl. Rather, being located nearby, the gas outlets are connected to the lower part of the liquid container so that the bowls can be filled. This system allows the feeding fluid of the electrolysis system to be different from the one we have in the vertical container of the mechanism. For example, in cases where the feed fluid is water with dissolved salts necessary for the electrolysis system to function, it can be detrimental to the mechanical elements of the vertical volume. In that case, the vertical volume will contain some fluid that does not damage the said mechanism. In the case of electrolysis systems that use pure distilled water, the vertical volume of the mechanism can contain pure distilled water that feed the electrolysis system. For this, it would be enough for the bowls mechanism to be made of some material that does not rust or corrupt with water, such as stainless steel or polymeric materials.

In another embodiment the chain is replaced with a wheel of sufficient dimensions to anchor the bowls necessary to achieve sufficient power from the electric generator for the system to be autonomous.

Other features and advantages of the invention will be apparent to one of ordinary skill from the following detailed description and accompanying drawings.

Unless defined otherwise, all technical and scientific terms used herein have the same meaning as is commonly understood by one of ordinary skill in the art to which this invention belongs. Furthermore, the materials, methods, and examples are illustrative only and are not intended to be restrictive.

### Detailed description of the invention

To invention will be better understood in the present chapter, with some examples and the following figures:
- Figure 1: is a side view of an example of an electrolytic cell according to the invention.
- Figure 2: is a front view of the electrolytic cell of figure 1.
- Figure 3: shows the exit of gases from the production unit, and that are directed towards bowls.
- Figure 4: shows the upper part of the electrolytic cell of the previous figures.

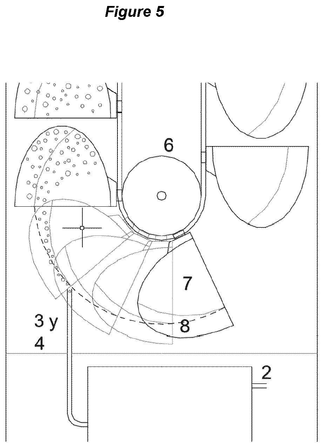

- Figure 5: shows how a notch allows a bowl to rotate without touching the nozzles from the gas production unit.

### Numerical references used in the figures

- 1: . Gas production unit
- 2.: Water inlet
- 3.: Oxygen nozzle
- 4.: Hydrogen nozzle
- 5.: Chain
- 6.: Chain gear wheel
- 7.: Bowl
- 8.: Notch
- 9.: Rotating shaft
- 10.: Liquid minimum level
- 11.: Generator gear wheel
- 12.: Electric generator
- 13.: Revolution multiplier
- 14.: Starting battery
- 15.: Charge controller
- 16.: External electric supply
- 17.: Wall
- 18.: Hydrogen outlet
- 19.: Liquid maximum level
- 20.: Liquid level detector
- 21.: Lower sensor
- 22.: Upper sensor
- 23.: Liquid container lower part
- 24.: Oxygen outlet
- 25.: Electric wire

### Description Exemplary Embodiments

According to the illustrated example of the invention, the electrolytic cell comprises a gas production unit **1** made of a cathode and an anode (not illustrated) that are immersed in an electrolyte which, in this example, consists of water. Electrolysis may be induced within the unit **1** which results in the production of hydrogen and oxygen gas. PEM or proton exchange technology is preferably used, due to its better performance with irregular electrical charges and to be able to be used with distilled water.

A MEA membrane multiple electrode system has been selected, of the PEM type, encapsulated in a polymer that avoids being in contact with outside water, since it is intended to be immersed. For this it is necessary that the electrical connections are insulated and sealed to the outside.

The gas production unit **1** requires thermal energy, since an endothermic reaction occurs. If the unit **1** was surrounded by air its temperature would drop, thus reducing its performance. Having the unit **1** immersed, as it is the case in this example, increases its thermal conductivity and facilitate therefore the temperature stabilization without the need to implement a cooling system.

The unit **1** being immersed and with the water inlet **2** open does not require an inlet channeling, feeding on the water that surrounds it. At each end of the battery of MEAs (membrane electrodes) there is an exit for the gases (hydrogen and oxygen in the present example) that are conducted to respective nozzles **3, 4.** Each nozzle **3, 4** communicates with a vertical liquid container, both liquid containers being separated by a wall, to prevent the gas bubbles from mixing.

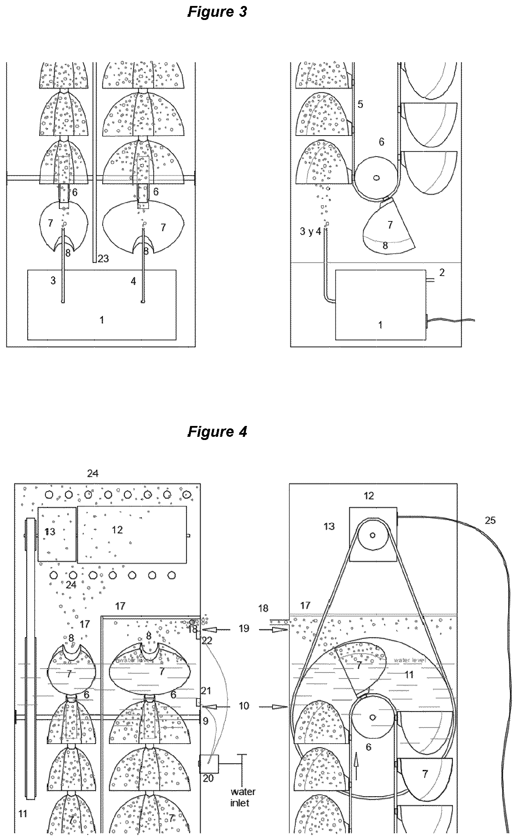

As shown on figure 3, the wall **23** does not completely separate the two liquid containers, so that water can flow from one liquid container to the other and fill them. In this example, water enter the liquid containers via the gas production unit **1,** this later one being connected via an inlet **2** to an external water source.

Inside each vertical liquid container is a drive mechanism comprising several bowls **7** fixed to a chain **5** that forms a vertical loop. The chain **5** turns around two gearwheels **6** (one above and one below). Each bowl **7** contains a notch **8** that is located externally, on a bowl side that is opposite to the bowl internal side that contacts the chain **5.** Providing a notch **8** facilitates and maximizes the entry of gas bubbles into the bowl when the chain **5** moves.

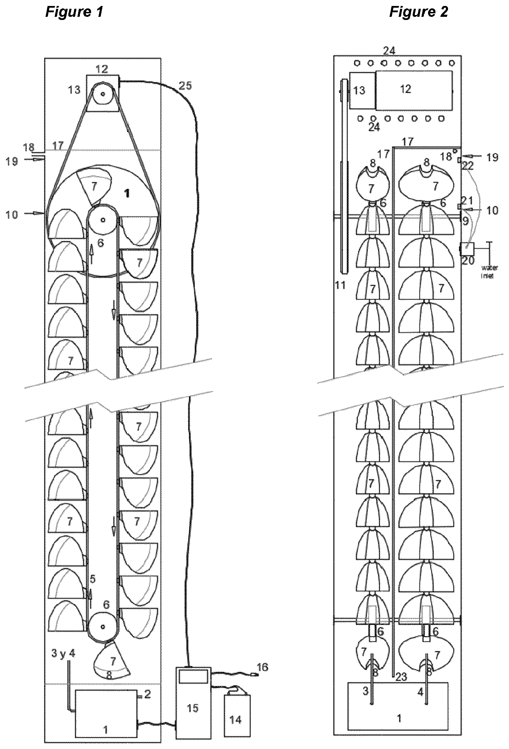

Figure 2 shows the two rows of bowls **7.** Small bowls (left column) are for oxygen and large bowls (right column) are for hydrogen. This figure also shows the axes of the gears **6,11** and how the two rows interact on the gear with the largest diameter **11** , this later one acting on the electric generator **12** and a speed multiplier **13.** An hydrogen outlet 18 (see figures 1 and 2) and oxygen outlets **24** (see figure 2) are also shown.

As mentioned previously, the hydrogen bowls **7** are larger than the oxygen bowls **7.** This is due to the fact that the volume of hydrogen generated is higher than the volume of oxygen. The oxygen bowls **7** could have the same volume as the hydrogen ones. It is however more advantageous to reduce their volume, but not their shape. By doing so, friction is reduced and energy losses are minimized.

In the cell upper part are two gear wheels **6** fixed to a common rotating shaft **9** and that interact with the chains **5.** The rotating shaft **9** is situated below the minimum water level **10.** Another gear wheel **11,** located in the oxygen liquid container, is also fixed on the rotating shaft **9.** It interacts with the electric generator **12,** via a belt and a revolution multiplier **13.** This other gear wheel **11** has a different size to correct the rotational revolutions necessary for the electric generator **12,** since the rotational speed of the gearwheels **6** connected to the bowls **7** is slower than what is needed for the electric generator **12.** This renders it necessary to include the said revolution multiplier **13.** The multiplier factor is a function of the generator and its optimal revolutions.

A starting battery **14** is used to initiate the electrolysis within the gas production unit **1.** The use of a direct current generator may facilitate the charging of the starting battery **14,** but it could also well work with an alternating current generator. The starting battery **14** is connected by means of a charge controller **15.** An external supply **16** of electric energy is also possible, if the energy in the system is higher to that required for electrolysis.

In the liquid container upper part there is a space for the gear mechanism and for the electric generator **12.** This space is devoid of liquid. It is also isolated from the hydrogen liquid container, with horizontal and vertical walls **17.** The hydrogen outlet **18** is as close as possible with respect to the said space.

The hydrogen outlet **18** is located just above the maximum level **19** that can be reached by the water. The water level must also be maintained above the rotating shaft **9.** To guarantee the correct level of water, a liquid detector **20** is provided. Filling of the liquid containers is activated when the water level is below the minimum level **10.** The minimum level **10,** respectively maximum level **19,** are detected by a lower sensor **21,** respectively upper sensor **22.** To simplify the filling, the two liquid containers communicate in the cell lower part **23** but maintaining the nozzles **3,4** above to prevent the gases from mixing up in the liquid containers. It is important to keep the hydrogen pure in order to be used in reverse electrolysis cells.

The oxygen liquid container communicates with the external environment through outlets **24.** Those outlets **24** are located within the said space that contains the electric generator **12.** By letting the gaseous oxygen go outside, as it is denser than the air, it descends through along the cell external wall, slightly heating the walls and transporting part of the heat from the upper part to the lower area where it is absorbed by the electrolysis process. This oxygen gas spreads over the surface near the device, improving the quality of breathable air.

The electric generator **12** is connected by a wire **25** outside the gas production unit 1, via the charge controller **15,** which regulates the gas production depending on the battery charge. In this way, when the battery **14** is fully charged, e can allocate all the electrical power can be allocated to the production of hydrogen.

The invention is of course not limited to those examples and figures but covers any alternative that is defined in the claims.

## Claims

1. An electrolytic cell comprising:
- a gas production unit (1) including an electrolyte, a cathode and an anode;
- an electric generator (12);
- a drive mechanism (5-9);
said generator (12) being designed to be actuated by the drive mechanism (5-9); **characterized by** the fact that it furthermore comprises a liquid container that communicates with the gas production unit (1), and wherein the drive mechanism (5-9) is located within said liquid container and is adapted to receive a mechanical energy that is provided by gas bubbles generated within said liquid by the gas production unit (1).

2. Electrolytic cell according to claim 1 comprising a second drive mechanism and a second liquid container that communicates with the gas production unit (1), and wherein the second drive mechanism (5-9) is located within said second liquid container and is adapted to receive a mechanical energy that is provided by gas bubbles generated within said liquid by the gas production unit (1); both liquid containers being isolated from each other and communicating with the gas production unit (1) via separate nozzles (3,4) that respectively communicate with the cathode and the anode environment.

3. Electrolytic cell according to claim 1 or 2 wherein said electrolyte is water.

4. Electrolytic cell according to claim 3 for the production of hydrogen and/or oxygen.

5. Electrolytic cell according to anyone of the previous claims wherein said electrolyte and said liquid are the same.

6. Electrolytic cell according to claim 2, 3, 4 or 5 wherein said generator (12) is designed to be actuated by both drive mechanisms (5-9).

7. Electrolytic cell according to anyone of the previous claims wherein the drive mechanism comprises a vertical chain (5) forming a closed loop that turns around an upper and a lower gear wheels (6), and several bowls (7) fixed to the chain (5).

8. Electrolytic cell according to claim 7 wherein each bowl (7) contains a notch (8) that is located externally, on a bowl side that is opposite to the bowl internal side that contacts the chain (5).

9. Electrolytic cell according to claim 7 or 8 comprising two drive mechanisms that use a single and same chain (5).

10. Electrolytic cell according to anyone of the previous claims wherein said generator (12) is connected to the gas production unit (1).

11. Electrolytic cell according to anyone of the previous claims wherein the gas production unit (1) is located at the bottom of the cell.

12. Electrolytic cell according to anyone of the previous claims comprising one or several conduit lines between the gas production unit (1) and the drive mechanism(s).

13. Electrolytic cell according to anyone of the previous claims wherein the liquid container is a well, a pool, a lake, a sea or any other similar liquid container.

14. Electrolytic cell according to anyone of the previous claims comprising a starting battery.

15. Electrolytic cell according to anyone of the previous claims comprising a liquid detector made of at least one lower sensor (21) and one upper sensor (22).
